# EUROPÄISCHE PATENTSCHRIFT

(11) **EP 2 477 914 B1**
(45) Veröffentlichungstag und Bekanntmachung des Hinweises auf die Patenterteilung: **17.04.2013**
(21) Anmeldenummer: 11712751.4
(22) Anmeldetag: 21.02.2011
(51) Int. Cl.: B65G 1/137, B65G 47/91

(54) **SYSTEM UND VERFAHREN ZUR VEREINZELUNG UND KOMMISSIONIERUNG VON ARTIKELN**
SYSTEM AND METHOD FOR SEPARATING AND PICKING ARTICLES
SYSTÈME ET PROCÉDÉ DE SÉPARATION ET DE PRÉPARATION DE COMMANDE D'ARTICLES

(30) Priorität: 24.02.2010 DE 102010002317
(43) Veröffentlichungstag der Anmeldung: 25.07.2012
(73) Patentinhaber: Apologistics GmbH, 04416 Leipzig (DE)
(72) Erfinder: FOLK, Michael, 04838 Jesewitz (DE)
(74) Vertreter: Carlsohn, Alexander
(86) Internationale Anmeldenummer: PCT/DE2011/075029
(87) Internationale Veröffentlichungsnummer: WO 2011/103872

(56) Entgegenhaltungen:
- EP-A1- 0 139 857
- EP-A1- 1 260 436
- DE-U1- 29 701 564
- JP-A- 5 217 014
- JP-A- 58 045 884
- US-A1- 2002 157 919
- US-A1- 2008 267 759

## Beschreibung

Die Erfindung betrifft ein System zur Vereinzelung und Kommissionierung von Artikeln sowie ein dazu geeignetes Verfahren.

Aus DE 43 18 341 B4 ist ein Verfahren zur Lagerung von Apothekenartikeln bekannt, bei dem Artikel mit quaderförmigen Verpackungen aus einem Gebinde auf ein Transportband geschüttet und damit einer Erfassungseinrichtung zugeführt werden. Die Erfassungseinrichtung umfasst vier Scanner, die so angeordnet sein sollen, dass die an den Schmalseiten, dem Boden oder dem Deckel der Verpackung angeordneten Barcodes erfasst werden können. Die Erfassungseinrichtungen sind an eine Rechnereinheit angeschlossen, in der eine Datenbank zur Speicherung der erfassten Barcodes installiert ist. Damit die Scanner den Barcode erfassen können, sind in dem Transportband und an dessen Randbereichen durchsichtige Flächen vorgesehen. Befindet sich eine der Verpackungen in einer ungünstigen Lage so wird sie mittels einer Aussortiervorrichtung, beispielsweise einer mechanisch betriebenen Abweisklappe oder einer Pressluftdüse, ausgesondert und über eine Rückführvorrichtung an den Beginn des Transportbandes befördert. Der Artikel durchläuft damit dasselbe Prozedere erneut, in der Hoffnung, dass er diesmal in einer Lage auf dem Transportband zu liegen kommt, die seine Identifizierung mittels der Scanner ermöglicht. Wird der Artikel erkannt, so gelangt er zu einer Vermessungseinrichtung, mit deren Hilfe die Außenabmessungen des Artikels bestimmt werden. Anschließend wird der Artikel mittels eines Portalroboters in einer Schublade abgelegt.

Das aus dem Stand der Technik bekannte Verfahren erfordert somit eine Identifizierung des Artikels, bevor eine Vereinzelung durchgeführt werden kann. Gelingt eine Identifizierung nicht, muss der Artikel ausgesondert werden. Dazu sind eine Aussonderungsvorrichtung und eine Rückführvorrichtung erforderlich. Damit ist die Vereinzelung der Artikel insgesamt mit einem hohen technischen Aufwand verbunden.

DE 10 2007 077 411 A1 offenbart ein Verfahren und eine Vorrichtung zum Einlagern von Arzneimittelverpackungen. Die Verpackungen, die sich in Schubladen in einem Schubladenregal befinden, sollen vereinzelt und anschließend anhand ihrer Beschriftung identifiziert werden. Nicht identifizierbare Verpackungen werden nach einem Identifizierungsversuch aussortiert oder in den Ausgangsbehälter zurückgeworfen.

DE 10 2007 038 837 A1 ist auf ein Verfahren und eine Vorrichtung zur Umsetzung von Stückgut gerichtet, die für die Vereinzelung von Paketen geeignet sein soll. Nicht identifizierte Artikel werden an einer vorgegebenen Position (Palette an der Ablageposition E) abgelegt. Die dort abgesetzten Artikel sollen dann "manuell oder durch einen zusätzlichen Roboter" nachsortiert werden.

EP 1 260 436 A1 offenbart ein System geeignet zur Vereinzelung und Kommissionierung von Artikeln, umfassend
- eine erste Transporteinrichtung zur Aufnahme und zum Transport angelieferter Artikel;
- eine zweite Transporteinrichtung zur Aufnahme und zum Transport vereinzelter Artikel ;
- eine erste Erfassungseinrichtung zur Erfassung zumindest der Position der Artikel auf der ersten Transporteinrichtung ;
- eine Handhabungseinrichtung zur separaten Entnahme von Artikeln von der ersten Transporteinrichtung und deren Überführung auf die zweite Transporteinrichtung ;
- eine Datenverarbeitungseinrichtung zur Verarbeitung der von der ersten Erfassungseinrichtung erfassten Daten und zur Steuerung der Handhabungseinrichtung.

US 2008/0267759 A1 offenbart:
ein Verfahren zur Vereinzelung und Kommissionierung von Artikeln, umfassend
   (a) die Erfassung zumindest der Position angelieferter Artikel, die sich auf einer ersten Transporteinrichtung befinden;
   (b) die Aufnahme eines in Schritt (a) erfassten Artikels von der ersten Transporteinrichtung mittels einer Handhabungseinrichtung;
   (e) die Ablage des Artikels auf einer zweiten Transporteinrichtung.

In beiden Systeme, kann die Handhabungseinrichtung nicht weiterarbeiten, wenn die Identifizierung eines Artikel unmöglich oder unkorrekt ist.

Aufgabe der Erfindung ist es, die Nachteile nach dem Stand der Technik zu beseitigen. Es soll insbesondere ein System zur Vereinzelung und Kommissionierung von Artikeln angegeben werden, das eine sichere Identifizierung ermöglicht und so eine Aussonderung und Rückführung des Artikels verhindert. Ferner soll ein Verfahren angegeben werden, das die Vereinzelung und Kommissionierung von Artikeln insbesondere mit diesem System ermöglicht.

Diese Aufgabe wird durch die Merkmale der Ansprüche 1 und 7 gelöst. Zweckmäßige Ausgestaltungen der Erfindungen ergeben sich aus den Merkmalen der Ansprüche 2 bis 6 sowie 8 bis 11.

Nach Maßgabe der Erfindung ist ein System zur Vereinzelung und Kommissionierung von Artikeln, insbesondere von Apothekenartikeln, vorgesehen, das
- eine erste Transporteinrichtung zur Aufnahme und zum Transport angelieferter Artikel;
- eine zweite Transporteinrichtung zur Aufnahme und zum Transport vereinzelter Artikel;
- eine erste Erfassungseinrichtung zur Erfassung zumindest der Position der Artikel auf der ersten Transporteinrichtung;
- eine Handhabungseinrichtung zur separaten Entnahme von Artikeln von der ersten Transporteinrichtung und deren Überführung auf die zweite Transporteinrichtung;
- eine zweite Erfassungseinrichtung zur Identifizierung der Artikel;
- eine Ablagezone, die der zweiten Erfassungseinrichtung nachgeordnet ist, zur Zwischenlagerung eines von der zweiten Erfassungseinrichtung nicht identifizierten Artikels und dessen Positionsänderung in Bezug auf dessen Lage in der Handhabungseinrichtung; und
- eine Datenverarbeitungseinrichtung zur Verarbeitung der von der ersten und zweiten Erfassungseinrichtung erfassten Daten und zur Steuerung der Handhabungseinrichtung;
umfasst, wobei die zweite Erfassungseinrichtung der ersten Erfassungseinrichtung nachgeschaltet ist und wobei die zweite Erfassungseinrichtung zwischen der ersten und zweiten Transporteinrichtung angeordnet und auf einen Punkt des Weges gerichtet ist, den ein von der Handhabungseinrichtung von der ersten Transporteinrichtung entnommener Artikel bei dessen Überführung zu der zweiten Transporteinrichtung zurücklegt.

Nach Maßgabe der Erfindung ist ferner ein Verfahren zur Vereinzelung und Kommissionierung von Artikeln, insbesondere von Apothekenartikeln, vorgesehen, das folgende Schritte umfasst:
(a) die Erfassung zumindest der Position angelieferter Artikel, die sich auf einer ersten Transporteinrichtung befinden;
(b) die Aufnahme eines in Schritt (a) erfassten Artikels von der Transporteinrichtung mittels einer Handhabungseinrichtung;
(c) die Führung des in Schritt (b) von der Handhabungseinrichtung aufgenommenen Artikels zu einer zweiten Erfassungseinrichtung;
(d) die Identifizierung des Artikels von der zweiten Erfassungseinrichtung oder, wenn die Identifizierung misslingt, die Ablage des Artikels auf eine Ablagezone, die der zweiten Erfassungseinrichtung nachgeordnet ist, und erneute Aufnahme des Artikels mittels der Handhabungseinrichtung von der Ablagezone unter Veränderung der Position des Artikels in Bezug auf dessen Lage in der Handhabungseinrichtung und Wiederholung der Schritte (c) und (d) bis zur Identifizierung des Artikels; und
(e) die Ablage des identifizierten Artikels auf einer zweiten Transporteinrichtung.

Das erfindungsgemäße System und Verfahren zeichnen sich dadurch aus, dass der von der Handhabungseinrichtung von der ersten Transporteinrichtung aufgenommene Artikel nicht mehr auf diese Transporteinrichtung zurückgeführt wird, insbesondere auch dann nicht, wenn der aufgenommene Artikel nicht identifiziert werden kann. Wenn ein Artikel zunächst von der zweiten Erfassungseinrichtung nicht identifiziert werden kann, wird der Artikel in der Ablagezone abgelegt, die vorzugsweise unmittelbar an die zweite Erfassungseinrichtung angrenzt. Die Handhabungseinrichtung nimmt den abgelegten Artikel von dort so wieder auf, dass der Artikel eine veränderte Lage in Bezug auf die Handhabungseinrichtung aufweist. Ist beispielsweise der Barcode auf dem Artikel durch einen Bestandteil der Handhabungseinrichtung, beispielsweise einen Greifer verdeckt, so ermöglicht die Ablage des Artikels auf der Ablagezone und die Neuaufnahme des Artikels in veränderter Lage eine Freilegung des Barcodes, so dass der Artikel nach diesem Zwischenschritt nun der zweiten Erfassungseinrichtung erneut zur Identifizierung zugeführt werden kann. Sollte auch dann eine Identifizierung nicht möglich sein, kann die Ablage auf der Ablagezone und die erneute Aufnahme mit veränderter Lage wiederholt werden. Der Schritt Ablage eines nicht identifiziertes Artikels auf der Ablagezone und dessen Aufnahme von der Ablagezone in veränderter Lage wird n-mal ausgeführt, wobei n eine vorgegebene Ganzzahl größer 0 ist und beispielsweise 1, 2 oder 3 beträgt. Kann der Artikel trotzdem nicht identifiziert werden, wird er ausgesondert, beispielsweise durch Ablage auf einer Aussonderungszone. Dort kann durch einen Lageristen über die Weiterbehandlung des nicht-identifizierten Artikels entschieden werden. Eine solche Aussonderung kann beispielsweise dann erforderlich sein, wenn der auf dem Artikel angebrachte Barcode beschädigt ist.

Das erfindungsgemäße System und das erfindungsgemäße Verfahren sind insbesondere für die Vereinzelung von sortenunreinen Artikeln wie beispielsweise von Apothekenartikeln geeignet, kann aber auch für die Vereinzelung anderer Artikel verwendet werden. Ein Vorteil der Erfindung liegt darin, dass die Vereinzelung zur Kommissionierung nicht sortenrein angelieferter Artikel, die sich hinsichtlich ihrer Identität, ihrer äußeren Gestalt, ihres Gewichtes und/oder anderer Merkmale unterscheiden, verwendet werden kann. Unter Verwendung des erfindungsgemäßen Systems und des erfindungsgemäßen Verfahrens kann die Vereinzelung nichtsorteinrein angelieferter Artikel automatisiert, d. h. ohne menschliche Eingriffe, ausgeführt werden, wobei im Gegensatz zum Stand der Technik ein vergleichsweise geringer maschineller Aufwand erforderlich ist.

Vorzugsweise ist die erste Erfassungseinrichtung eine optoelektronische Erfassungseinrichtung, die auf die erste Transporteinrichtung gerichtet ist. Beispielsweise kann die erste Erfassungseinrichtung eine Kamera wie eine CCD-Kamera sein, die kontinuierlich oder diskontinuierlich Bilder der auf der Transporteinrichtung befindlichen angelieferten Artikel aufnimmt.

Zweckmäßigerweise erfasst die erste Erfassungseinrichtung nicht nur die Position der angelieferten Artikel auf der ersten Transporteinrichtung, sondern zusätzlich auch weitere Merkmale des Artikels. Bei diesen Merkmalen des Artikels kann es sich beispielsweise um die äußere Form des Artikels, z. B. zylindrisch, kugelförmig, quaderförmig oder pyramidenförmig; Elemente der äußeren Form des Artikels, z. B. eine runde, dreieckige, viereckige Oberfläche; eine Klassifizierung des Artikels nach dessen Gewicht, Größe oder Material, z. B. feste Verpackung aus Pappe oder Verpackung mit variabler Gestalt wie Beutel, beispielsweise Teebeutel oder Badesalzbeutel; sowie um Kombinationen eines dieser Merkmale mit einem oder mehreren weiteren dieser Merkmale handeln.

Diese Merkmale des Artikels sowie dessen Position auf der ersten Transporteinrichtung werden aus den Daten, im Falle einer Kamera aus den Bildern, die von der ersten Erfassungseinrichtung an die Datenverarbeitungseinrichtung übermittelt werden, mittels einer Software errechnet. Anhand der gewonnenen Daten kann die Klassifizierung der Artikel in vorgegebene Gruppen, beispielsweise in Bezug auf das Merkmal Größe in eine Klasse mit einer Größe unter einem vorgegebenen Grenzwert (Klein-Klasse) und eine Klasse mit einer Größe bei oder über dem vorgegebenen Grenzwert (Groß-Klasse) vorgenommen werden. Aus den ermittelten Daten kann ferner auf das Gewicht des Artikels geschlossen werden, so dass eine Klassifizierung des Artikels nach dem Gewicht des Artikels, z. B. in eine Gruppe mit einem Gewicht unter einem vorgegebenen Grenzwert (Leicht-Klasse) oder eine Gruppe mit einem Gewicht bei oder über einem vorgegebenen Grenzwert (Schwer-Klasse), vorgenommen werden kann. Eine solche Klassifizierung nach Gewicht kann beispielsweise anhand der Daten, die die äußeren Abmessungen des Artikels betreffen, sowie den Daten über das äußere Material des Artikels gewonnen werden. Beispielsweise kann bei Apothekenartikeln aus den von der ersten Erfassungseinrichtung aufgenommenen Bildern mittels einer Software ermittelt werden, ob es sich um Glasflaschen, d. h. um einen Artikel mit hohem Gewicht, oder um Tablettenschachteln der Packungsgröße N1 gemäß der Packungsgrößenverordnung, d. h. einem Artikel mit geringem Gewicht handelt.

Die aufgenommenen Bilder werden vorzugsweise mittels einer Bildverarbeitungssoftware, die in der Datenverarbeitungsvorrichtung gespeichert ist, ausgewertet. Die Bildverarbeitungssoftware bildet zusammen mit der ersten Erfassungseinrichtung ein Bildverarbeitungssystem. Dieses Bildverarbeitungssystem kann beispielsweise ein Lichtschnittverfahren nutzen, das auf dem Prinzip des an sich bekannten messtechnischen Triangulationsverfahrens beruht. Mittels des Triangulationsverfahrens können die Lagekoordinaten der Artikel und damit dessen Position mathematisch berechnet werden. Auf diese Weise können die Artikel in jeder vorgefundenen Art und Weise erfasst werden. Eine nach dem Stand der Technik erforderlich Zubringung in einem Transportbehälter ist nicht länger erforderlich.

Die Daten, die von der ersten Erfassungseinrichtung an die Datenverarbeitungseinrichtung übermittelt werden, werden nicht zur Identifizierung des Artikels genutzt.

Nachdem in der Datenverarbeitungseinrichtung die Position und, falls vorgegeben, weitere Merkmale eines auf der ersten Transporteinrichtung befindlichen Artikels ermittelt worden sind, generiert die Datenverarbeitungseinrichtung Steuersignale für die Handhabungseinrichtung und übermittelt diese an die Handhabungseinrichtung. Damit wird die Handhabungseinrichtung veranlasst, den Artikel von der ersten Transporteinrichtung aufzunehmen und zur zweiten Erfassungseinrichtung zu führen.

Die Handhabungseinrichtung ist zweckmäßigerweise ein Roboter, beispielweise ein Roboter mit Knickarm oder Schwenkarm. Vorzugsweise ist der Roboter ein Roboter mit mehreren Bewegungsachsen. Der Robtor sollte zumindest eine Greif- oder Saugeinrichtung zur Aufnahme des Artikels von der ersten Transporteinrichtung aufweisen. Vorzugsweise weist der Roboter mehrere Greif- oder Saugeinrichtungen auf, wobei jede dieser Greif- oder Saugeinrichtungen zur Aufnahme von Artikeln mit vorgegebenen Merkmalen angepasst sind. Diese Merkmale sind die Merkmale, die aus den Bildern, die von der ersten Erfassungseinrichtung aufgenommen worden sind, ermittelt wurden. Anhand dieser Merkmale kann somit eine Greif- oder Saugeinrichtung der Handhabungseinrichtung ausgewählt werden, die an den aufzunehmenden Artikel speziell angepasst ist.

Die zweite Erfassungseinrichtung soll den von der Handhabungseinrichtung aufgenommenen Artikel identifizieren. Dazu können Identifizierungsinformationen, die auf den Artikel aufgebracht sind, beispielsweise der Barcode, genutzt werden. Bei Apothekenartikeln kann beispielsweise die Pharmazentralnummer (PZN), die als Barcode vorliegen kann, zur Identifizierung genutzt werden. Die zweite Erfassungseinrichtung ist zweckmäßigerweise ein Scanner wie ein Barcode-Scanner. Die zweite Erfassungseinrichtung soll diese Identifizierungsinformationen erfassen und an die Datenverarbeitungseinrichtung übermitteln. In der Datenverarbeitungseinrichtung werden die von der zweiten Erfassungseinrichtung erfassten Identifizierungsinformationen mit einer dort hinterlegten Datenbank verglichen. Ist der Artikel anhand der Identifizierungsinformationen identifiziert worden, im Falle von Apothekenartikel als Präparat eines bestimmten Herstellers in einer bestimmten Packungsgröße, wird der Artikel von der Handhabungseinrichtung auf der zweiten Transporteinrichtung, vorzugsweise an einem von der Datenverarbeitungseinrichtung vorgegebenen Ablageort abgelegt. Dazu wird bevorzugt von der Datenverarbeitungseinrichtung der Ablageort des identifizierten Artikels auf der zweiten Transporteinrichtung errechnet und für die Handhabungseinrichtung Steuersignale generiert und an die Handhabungseinrichtung übermittelt, so dass die Handhabungseinrichtung zur Ablage des identifizieren Artikels am vorgegebenen Ablageort auf der zweiten Transporteinrichtung veranlasst wird. Damit ist die Vereinzelung der Artikel abgeschlossen.

Kann die zweite Erfassungseinrichtung die Identifizierungsinformationen nicht erfassen, so wird beispielsweise eine Information wie "Erfassung des Barcodes nicht möglich" oder ein dafür stehender Code an die Datenverarbeitungseinrichtung übermittelt. Auch diese Information wird hier als Identifizierungsinformation bezeichnet.

Sollte der Artikel anhand der von der zweiten Erfassungseinrichtung an die Datenverarbeitungseinrichtung übermittelten Identifizierungsinformationen nicht identifiziert werden können, beispielsweise weil der von dem Artikel aufgebrachte Barcode von der Greif- oder Saugeinrichtung der Handhabungseinrichtung ganz oder teilweise verdeckt ist, so können von der Datenverarbeitungseinrichtung Steuersignale für die Handhabungseinrichtung generiert und an die Handhabungseinrichtung übermittelt werden. Daraufhin legt die Handhabungseinrichtung den nicht-identifizierten Artikel auf die Ablagezone, die der zweiten Erfassungseinrichtung nachgeordnet ist, ab und nimmt diesen, vorzugsweise unmittelbar nach Ablage, wieder auf. Dabei wird der Artikel von der Handhabungseinrichtung in etwas veränderter Lage aufgenommen, so dass die Identifizierungsinformationen nun nicht mehr von der Greif- oder Saugeinrichtung der Handhabungseinrichtung verdeckt sein sollten. Der Ausdruck "veränderte Lage des Artikels in Bezug auf die Handhabungsposition" soll in der vorliegenden Erfindung so verstanden werden, dass der oder die Kontaktpunkte zwischen dem Artikel und der Greif- oder Saugeinrichtung der Handhabungseinrichtung vor dem Ablegen auf der Ablagezone sich von den Kontaktpunkten zwischen diesem Artikel und der Greif- oder Saugeinrichtung der Handhabungseinrichtung nach der Wiederaufnahme von der Ablagezone unterscheiden. Dies kann beispielsweise durch eine Wendung des Artikels auf der Ablagezone erreicht werden. Diese Wendung kann mittels der Handhabeeinrichtung, beispielsweise durch eine Drehung der Greif- oder Saugeinrichtung entlang einer Rotationsachse der Greif- oder Saugeinrichtung bewirkt werden. Nach der Wiederaufnahme des Artikels wird dieser zu der zweiten Erfassungseinrichtung zurückgeführt, um erneut Identifizierungsinformationen zu ermitteln.

Bei der ersten Transporteinrichtung handelt es sich vorzugsweise um ein Förderband. Auch die zweite Transporteinrichtung ist vorzugsweise ein Förderband.

Es kann vorteilhaft sein, wenn die angelieferten Artikel sich in nach oben offenen Transportbehältern, beispielsweise Wannen, befinden, die auf der ersten Transporteinrichtung transportiert werden. In einer solchen Wanne befinden sich typischerweise eine Vielzahl unterschiedlicher Artikel, beispielsweise Apothekenartikel. Eine Vielzahl von Wannen, die mit Artikeln in beliebiger Zusammenstellung gefüllt sind, wird auf dem Förderband zu der ersten Erfassungseinrichtung transportiert. Die erste Erfassungseinrichtung, beispielsweise eine CCD-Kamera, ist oberhalb des Förderbandes, beispielsweise an der Decke, befestigt und auf die offene Oberseite der Wannen gerichtet.

Auch an den Ablageorten der identifizierten Artikel können nach oben offene Transportbehälter, beispielsweise Wannen, vorgesehen sein, die sich auf der zweiten Transporteinrichtung, beispielsweise einem Förderband befinden. Die identifizierten Artikel werden dann von der Handhabungseinrichtung in von der Datenverarbeitungseinrichtung vorgegebenen Wannen abgelegt, wodurch die Vereinzelung abgeschlossen wird. Die Wannen können mittels der zweiten Transporteinrichtung zu einer nächsten Bearbeitungsstation der Logistik, beispielsweise einem Lager oder dem Versand, geführt werden.

Die Datenverarbeitungseinrichtung ist in an sich bekannter Weise mit den übrigen Komponenten des Systems, beispielsweise über Kabel oder kabellose Kommunikationsmittel verbunden. Die Datenverarbeitungseinrichtung zeichnet sich in einer Ausführungsform der Erfindung dadurch aus, dass
(i) die erste Erfassungseinrichtung in Schritt (a) Bilder der angelieferten Artikel aufnimmt und an die Datenverarbeitungseinrichtung übermittelt;
(ii) ein in der Datenverarbeitungseinrichtung gespeichertes Computerprogramm zumindest die Position angelieferter Artikel bestimmt;
(iii) die Datenverarbeitungseinrichtung Steuerungssignale für die Handhabungseinrichtung generiert und an die Handhabungseinrichtung übermittelt;
(iv) die Handhabungseinrichtung einen Artikel aufgrund dieser Steuersignale von der ersten Transporteinrichtung aufnimmt und zu der zweiten Erfassungseinrichtung führt;
(v) die zweite Erfassungseinrichtung Identifizierungsinformationen vom dem Artikel erfasst und diese an die Datenverarbeitungseinrichtung übermittelt;
(vi) in der Datenverarbeitungseinrichtung die von der zweiten Erfassungseinrichtung erfassten Identifizierungsinformationen mit einer Datenbank verglichen werden und, wenn der Artikel nicht identifiziert werden kann, von der Datenverarbeitungseinrichtung Steuersignale für die Handhabungseinrichtung generiert und an die Handhabungseinrichtung übermittelt werden, so dass die Handhabungseinrichtung zur Ablage des Artikels auf die Ablagezone, die der zweiten Erfassungseinrichtung nachgeordnet ist, zur erneuten Aufnahme des Artikels von der Ablagezone unter Veränderung der Position des Artikels in Bezug auf dessen Lage in der Handhabungseinrichtung und zur erneuten Führung des Artikels zur zweiten Erfassungseinrichtung veranlasst wird, sowie Wiederholung der Schritte (v) und (vi) bis der Artikel identifiziert worden ist.

Vorzugsweise errechnet die Datenverarbeitungseinrichtung ferner den Ablageort des identifizierten Artikels auf der zweiten Transporteinrichtung und generiert für die Handhabungseinrichtung Steuersignale und übermittelt diese an die Handhabungseinrichtung, so dass die Handhabungseinrichtung zur Ablage des identifizieren Artikels am vorgegebenen Ablageort auf der zweiten Transporteinrichtung veranlasst wird.

Zweckmäßigerweise steuert die Datenverarbeitungseinrichtung auch die erste und/oder zweite Transporteinrichtung, beispielsweise den Vorschub der Förderbänder.

Die Erfindung wird nachstehend anhand von Ausführungsbeispielen, die die Erfindung nicht einschränken sollen, unter Bezugnahme auf die Zeichnungen näher erläutert. Dabei zeigt
- Fig. 1: eine schematische perspektivische Darstellung einer Ausführungsform des erfindungsgemäßen Systems; und
- Fig. 2: eine schematische Draufsicht auf die in Fig. 1 gezeigte Ausführungsform des erfindungsgemäßen Systems.

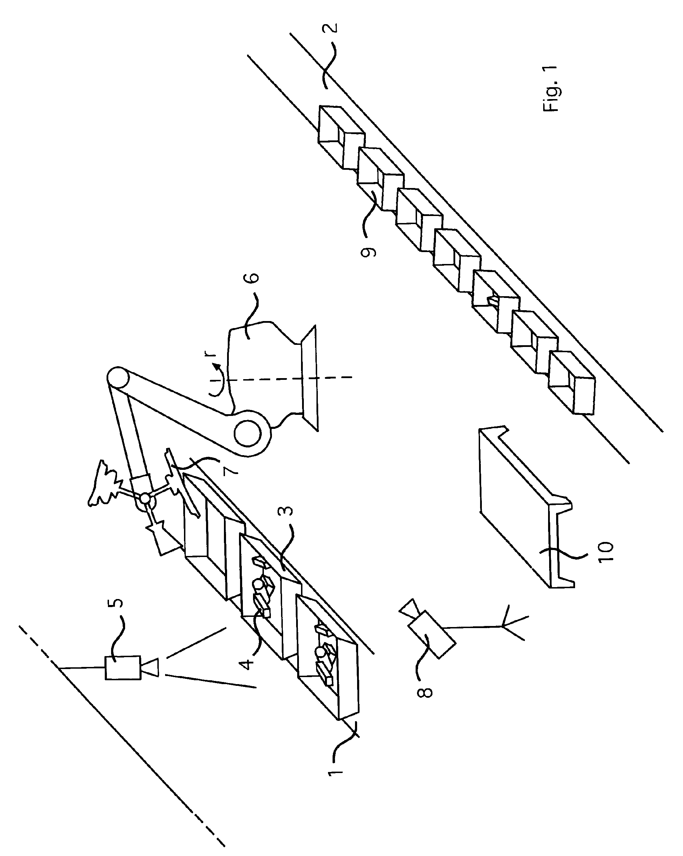

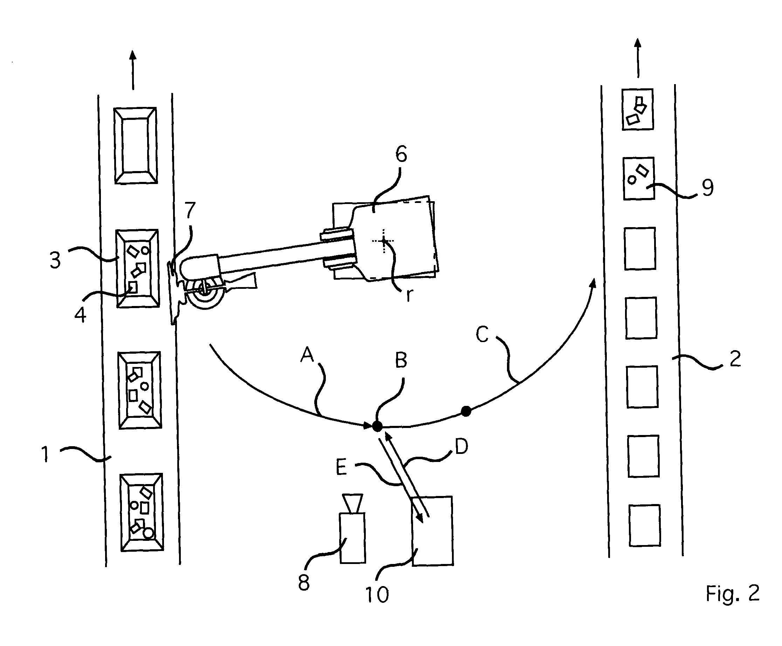

Die in den Figuren 1 und 2 gezeigte Ausführungsform des erfindungsgemäßen Systems weist eine erste Transporteinrichtung 1 in Form eines ersten Förderbandes und eine zweite Transporteinrichtung 2 in Form eines zweiten Förderbandes auf. Auf dem ersten Förderband 1 befinden sich erste Wannen 3. In diese Wannen 3 werden die angelieferten Artikel 4 gefüllt, wobei die Wannen mit einer Vielzahl unterschiedlicher Artikel befüllt sein können, die sich in ihren Merkmalen, wie Identität, Größe, Gewicht und anderen, unterscheiden. Die Wannen sind somit nichtsortenrein mit den angelieferten Artikeln 4 befüllt.

Auf dem ersten Förderband 1 werden die Wannen 3 mit den angelieferten Artikeln 4 zu der ersten Erfassungseinrichtung 5 geführt. In der gezeigten Ausführungsform ist die Erfassungseinrichtung 5 eine CCD-Kamera, die oberhalb des ersten Förderbandes 1 angeordnet und senkrecht nach unten auf das erste Förderband gerichtet ist. Die Kamera 5 ist dabei so ausgelegt, dass sie den von oben sichtbaren Innenraum einer Wanne 3 vollständig erfassen kann. (In Fig. 2 ist die Erfassungseinrichtung 5 zur Vereinfachung der Darstellung nicht gezeigt.)

Die CCD-Kamera 5 nimmt kontinuierlich Bilder von den in den Wannen 3 befindlichen Artikeln 4 auf. Die Bilder werden an eine Datenverarbeitungseinrichtung (nicht gezeigt) übermittelt. Die Datenverarbeitungseinrichtung verarbeitet die Bilder mittels einer Software und ermittelt so aus den Bildern die Position der Artikel 4 in der Wanne 3. Ferner werden mittels der Software weitere Merkmale jedes der Artikels 4 ermittelt, beispielsweise die äußere Form des Artikels 4, seine Größe und dessen Verpackungsmaterial. Anhand dieser Informationen wird eine Klassifizierung des Artikels 4 in der Wanne 3 vorgenommen. Ist der Artikel 4 beispielsweise Hustensaft in einer Glasflasche wird der Artikel 4 in die Klassen "schwer" und "zylinderförmig" eingeordnet. Die Identität des Artikels 4 wird aus den Bildern nicht errechnet, da aufgrund der Lage der Artikel 4 in der Wanne 3 die notwendigen Identifizierungsinformationen von der Kamera 5 nicht erfasst werden können. Auf Basis der Merkmale und der Klassifikationsergebnisse wird eine Greifeinrichtung 7 der Handhabungseinrichtung 6 ausgewählt, die für die Aufnahme des Artikels 4 aus der Wanne 3 geeignet ist. Die Handhabungseinrichtung 6 ist in dieser Ausführungsform der Erfindung ein Knickarm-Roboter mit mehreren Greifern 7, die jeweils für spezielle Greifaufgaben ausgelegt sind. Der Roboter 6 ist um eine senkrechte Achse r drehbar.

Die Datenverarbeitungseinrichtung generiert Steuersignale für den Roboter 6 und übermittelt die Steuersignale an diesen. Der Roboter 6 entnimmt mittels des von der Datenverarbeitungseinrichtung vorgegebenen Greifers 7 einen ebenfalls von der Datenverarbeitungseinrichtung vorgegebenen Artikel 4 aus der Wanne 3. Der Artikel 4 wird von dem Roboter 6 entlang des Weges A bis zu Punkt B, der auf diesem Weg liegt befördert. Auf Punkt B ist die zweite Erfassungseinrichtung 8, die zwischen dem ersten und dem zweiten Förderband 1, 2 angeordnet ist, gerichtet. In dieser Ausführungsform ist die zweite Erfassungseinrichtung 8 ein Barcode-Scanner. Mittels des Barcode-Scanners soll die Identifizierung des aufgenommenen Artikels an Punkt A vorgenommen werden.

Der Barcode-Scanner 8 erfasst den Barcode, der auf den Artikel 4 aufgebracht ist und übermittelt diesen an die Datenverarbeitungseinrichtung. Kann der Barcode-Scanner 8 den Barcode nicht erfassen, beispielsweise weil der Barcode durch den Greifer verdeckt ist oder weil der Barcode beschädigt ist, wird die Information "Erfassung des Barcodes nicht möglich" oder ein dafür stehender Code an die Datenverarbeitungseinrichtung übermittelt. Auch dies ist eine Identifizierungsinformation, auch wenn diese Information nicht ausreicht, um den Artikel 4 zu identifizieren.

Die Identifizierungsinformationen werden an die Datenverarbeitungseinrichtung übermittelt. In der Datenverarbeitungseinrichtung wird der von dem Barcode-Scanner erfasste Barcode mit einer dort hinterlegten Datenbank von Barcodes, in der jeder Barcode einem bestimmten Artikel zuordnet ist, verglichen. Ist der Artikel 4 anhand der Identifizierungsinformationen identifiziert worden, wird der Artikel 4 von dem Robtor 6 entlang Weg C zu einer zweiten Wanne 9 transportiert und in diese Wanne 9 abgelegt. Die Wanne 9 befindet sich auf dem zweiten Transportband 2. Die Wanne 9, in die der identifizierte Artikel ablegt werden soll, wird von der Datenverarbeitungseinrichtung vorgegeben, und die entsprechenden Steuersignale werden von der Datenverarbeitungseinrichtung an den Roboter 6 übermittelt. Der Ablageort, d. h. die Wanne 9, und die Identität des dort befindlichen Artikels 4, werden in der Datenverarbeitungseinrichtung gespeichert.

Damit kann das Verfahren erneut beginnen, dass heißt vom Roboter 6 in beschriebener Art und Weise ein weiterer Artikel 4 aus der Wanne 3 entnommen, identifiziert und in einer vorgegebenen Wanne 9 abgelegt werden.

Reichen die von dem Barcode-Scanner 8 an die Datenverarbeitungseinrichtung übermittelten Identifizierungsinformationen nicht aus, um den Artikel 4 an Punkt B zu identifizieren, beispielsweise weil der Barcode durch den Greifer verdeckt ist oder weil der Barcode beschädigt ist, so werden von der Datenverarbeitungseinrichtung Steuersignale für den Roboter 6 generiert und an diesen übermittelt, die eine Ablage des nicht-identifizierten Artikels 4 auf der Ablagezone 10 veranlassen. Dabei legt der Artikel den Weg D zurück. Die Ablagezone 10 kann beispielsweise ein Tisch oder eine Wanne sein. Unmittelbar nach der Ablage des Artikels 4 auf der Ablagezone 10 nimmt der Roboter 6 den soeben abgelegten Artikel 4 erneut auf, allerdings in etwas veränderter Lage, so dass die Identifizierungsinformationen nun nicht mehr von der Greif- oder Saugeinrichtung der Handhabungseinrichtung verdeckt sein sollten. Dies wird beispielsweise erreicht, indem der Artikel von dem Roboter in gewendeter Lage wiederaufgenommen wird, zum Beispiel indem durch eine Drehung der Greif- oder Saugeinrichtung entlang einer Rotationsachse der Artikel mittels eines Greifers, der ein anderer Greifer 7 als der Greifer vor der Ablage des Artikels auf der Ablagezone 10 sein kann (aber nicht muss), zunächst gedreht wird. Anschließend wird der Artikel 4 von dem Roboter über einen Greifer 7 wieder aufgenommen. Auch dieser Greifer 7 kann ein anderer Greifer 7 als der Greifer vor der Ablage des Artikels auf der Ablagezone 10 sein, dies ist jedoch nicht zwingend erforderlich. Nach der Wiederaufnahme des Artikels 4 wird dieser auf Weg E erneut zu Punkt B zurückgeführt. Dort versucht der Barcode-Scanner erneut, Identifizierungsinformationen zu ermitteln. Gelingt die Identifizierung des Artikels 4, beispielsweise weil der zunächst verdeckte Barcode nun freiliegt, so wird der Artikel wie oben beschrieben entlang Weg C zu einer vorgegebenen Wanne 9 transportiert und dort abgelegt. Gelingt die Identifizierung erneut nicht, so kann der Artikel 4 ein weiteres Mal auf der Ablagezone 10 abgelegt, dort beispielsweise gewendet und wieder aufgenommen werden. Anschließend wird er erneut zu Punkt B zur Erfassung von Identifizierungsinformationen befördert. Gelingt es auch dieses Mal nicht, den Artikel 4 zu identifizieren, beispielsweise weil der Barcode beschädigt ist, so wird der Artikel 4 ausgesondert, wobei er dazu beispielsweise entlang Weg C zu einer vorgegebenen Wanne 9 transportiert werden kann, die speziell für nicht-identifizierbare Artikel 4 bestimmt ist. Sobald der Artikel 4 in einer Wanne 9 abgelegt ist, kann der Roboter einen weiteren Artikel aus einer Wanne 3 aufnehmen, womit sich das Verfahren wiederholt.

### Bezugszeichenliste

- 1: erstes Förderband
- 2: zweites Förderband
- 3: erste Wanne
- 4: Artikel
- 5: Kamera
- 6: Roboter
- 7: Greifer
- 8: Barcodescanner
- 9: zweite Wanne
- 10: Ablagezone

## Patentansprüche

1. System zur Vereinzelung und Kommissionierung von Artikeln, insbesondere von Apothekenartikeln, umfassend
- eine erste Transporteinrichtung (1) zur Aufnahme und zum Transport angelieferter Artikel (4);
- eine zweite Transporteinrichtung (2) zur Aufnahme und zum Transport vereinzelter Artikel (4);
- eine erste Erfassungseinrichtung (5) zur Erfassung zumindest der Position der Artikel (4) auf der ersten Transporteinrichtung (1);
- eine Handhabungseinrichtung (6) zur separaten Entnahme von Artikeln (4) von der ersten Transporteinrichtung (1) und deren Überführung auf die zweite Transporteinrichtung (2);
- eine zweite Erfassungseinrichtung (8) zur Identifizierung der Artikel (4);
- eine Ablagezone (10), die der zweiten Erfassungseinrichtung (8) nachgeordnet ist, zur Zwischenlagerung eines von der zweiten Erfassungseinrichtung (8) nicht identifizierten Artikels (4) und dessen Positionsänderung in Bezug auf dessen Lage in der Handhabungseinrichtung (6); und
- eine Datenverarbeitungseinrichtung zur Verarbeitung der von der ersten und zweiten Erfassungseinrichtung (5, 8) erfassten Daten und zur Steuerung der Handhabungseinrichtung (6);
wobei die zweite Erfassungseinrichtung (8) der ersten Erfassungseinrichtung (5) nachgeschaltet ist und wobei die zweite Erfassungseinrichtung (8) zwischen der ersten und zweiten Transporteinrichtung (1, 2) angeordnet und auf einen Punkt (B) des Weges gerichtet ist, den ein von der Handhabungseinrichtung (6) von der ersten Transporteinrichtung (1) entnommener Artikel (4) bei dessen Überführung zu der zweiten Transporteinrichtung (2) zurücklegt.

2. System nach Anspruch 1,
**dadurch gekennzeichnet,**
**dass** die erste Erfassungseinrichtung (5) eine optoelektronische Erfassungseinrichtung ist, die auf die erste Transporteinrichtung (1) gerichtet ist.

3. System nach Anspruch 1 oder Anspruch 2,
**dadurch gekennzeichnet,**
**dass** die zweite Erfassungseinrichtung (8) ein Barcode-Scanner ist.

4. System nach einem der vorstehenden Ansprüche,
**dadurch gekennzeichnet,**
**dass** die Handhabungseinrichtung (6) mindestens eine Greif- oder Saugeinrichtung (7) aufweist.

5. System nach einem der vorstehenden Ansprüche,
**dadurch gekennzeichnet,**
**dass** die Handhabungseinrichtung (6) mehrere Greif- und/oder Saugeinrichtungen (7) aufweist, wobei für die Entnahme eines Artikels (4) von der ersten Transporteinrichtung (1) eine dieser Greif- und/oder Saugeinrichtungen (7) auf Basis der von der ersten Erfassungseinrichtung (5) erfassten Daten auswählbar ist.

6. System nach einem der vorstehenden Ansprüche,
**dadurch gekennzeichnet,**
**dass** die Handhabungseinrichtung (6) ein Roboter mit mehreren Bewegungsachsen ist.

7. Verfahren zur Vereinzelung und Kommissionierung von Artikeln, insbesondere von Apothekenartikeln, umfassend
(a) die Erfassung zumindest der Position angelieferter Artikel (4), die sich auf einer ersten Transporteinrichtung (1) befinden;
(b) die Aufnahme eines in Schritt (a) erfassten Artikels (4) von der ersten Transporteinrichtung (1) mittels einer Handhabungseinrichtung (6);
(c) die Führung des in Schritt (b) von der Handhabungseinrichtung (6) aufgenommenen Artikels (4) zu einer zweiten Erfassungseinrichtung (8);
(d) die Identifizierung des Artikels (4) von der zweiten Erfassungseinrichtung (8) oder, wenn die Identifizierung misslingt, die Ablage des Artikels (4) auf eine Ablagezone (10), die der zweiten Erfassungseinrichtung (8) nachgeordnet ist, und erneute Aufnahme des Artikels (4) mittels der Handhabungseinrichtung (6) von der Ablagezone (10) unter Veränderung der Position des Artikels (4) in Bezug auf dessen Lage in der Handhabungseinrichtung (6) und Wiederholung der Schritte (c) und (d) bis zur Identifizierung des Artikels (4); und
(e) die Ablage des identifizierten Artikels (4) auf einer zweiten Transporteinrichtung (2).

8. Verfahren nach Anspruch 7,
**dadurch gekennzeichnet,**
**dass** in Schritt (a) neben der Position angelieferter Artikel (4) auch deren Dimensionen ermittelt werden und im Falle einer Handhabungseinrichtung (6) mit mehreren Greif- und/oder Saugeinrichtungen (7) eine dieser Greif- und/oder Saugeinrichtungen (7) auf Basis der ermittelten Dimension des Artikels (4) ausgewählt wird.

9. Verfahren nach Anspruch 7 oder Anspruch 8,
**dadurch gekennzeichnet,**
**dass** in Schritt (a) die angelieferten Artikel (4) sich in nach oben offenen Transportbehältern (3) befinden, die auf der ersten Transporteinrichtung (1) zu der ersten Erfassungseinrichtung (5) zur Erfassung zumindest der Position der angelieferten Artikel (4) in den Transportbehältern (3) transportiert werden; und dass in Schritt (e) die vereinzelten Artikel (4) in nach oben offene Transportbehälter (9) abgelegt werden, die sich auf der zweiten Transporteinrichtung (2) befinden.

10. Verfahren nach einem der Ansprüche 7 bis 9,
**dadurch gekennzeichnet,**
**dass** eine Datenverarbeitungseinrichtung vorgesehen ist, wobei
(i) die erste Erfassungseinrichtung in Schritt (a) Bilder der angelieferten Artikel (4) aufnimmt und an eine Datenverarbeitungseinrichtung übermittelt;
(ii) ein in der Datenverarbeitungseinrichtung gespeichertes Computerprogramm zumindest die Position angelieferter Artikel (4) bestimmt;
(iii) die Datenverarbeitungseinrichtung Steuerungssignale für die Handhabungseinrichtung (6) generiert und an die Handhabungseinrichtung (6) übermittelt;
(iv) die Handhabungseinrichtung (6) einen Artikel (4) aufgrund dieser Steuersignale von der ersten Transporteinrichtung (1) aufnimmt und zu der zweiten Erfassungseinrichtung (8) führt;
(v) die zweite Erfassungseinrichtung (8) Identifizierungsinformationen von dem Artikel (4) erfasst und diese an die Datenverarbeitungseinrichtung übermittelt; und
(vi) in der Datenverarbeitungseinrichtung die von der zweiten Erfassungseinrichtung (8) erfassten Identifizierungsinformationen mit einer Datenbank verglichen werden und, wenn der Artikel (4) nicht identifiziert werden kann, von der Datenverarbeitungseinrichtung Steuersignale für die Handhabungseinrichtung (6) generiert und an die Handhabungseinrichtung (6) übermittelt werden, so dass die Handhabungseinrichtung (6) zur Ablage des Artikel (4) auf die Ablagezone (10), die der zweiten Erfassungseinrichtung (8) nachgeordnet ist, zur erneuten Aufnahme des Artikels (4) von der Ablagezone (10) unter Veränderung der Position des Artikels (4) in Bezug auf dessen Lage in der Handhabungseinrichtung (6) und zur erneuten Führung des Artikels (4) zur zweiten Erfassungseinrichtung (8) veranlasst wird, sowie Wiederholung der Schritte (v) und (vi) bis der Artikel (4) identifiziert worden ist.

11. Verfahren nach Anspruch 10,
**dadurch gekennzeichnet,**
**dass** die Datenverarbeitungseinrichtung ferner den Ablageort des identifizierten Artikels auf der zweiten Transporteinrichtung (2) errechnet und für die Handhabungseinrichtung (6) Steuersignale generiert und an die Handhabungseinrichtung (6) übermittelt, so dass die Handhabungseinrichtung (6) zur Ablage des identifizieren Artikels (4) am vorgegebenen Ablageort auf der zweiten Transporteinrichtung (2) veranlasst wird.

## Claims

1. A system for separating and order picking articles, in particular pharmacy articles, comprising
- a first transportation system (1) for receiving and transporting delivered articles (4);
- a second transportation system (2) for receiving and transporting separated articles (4);
- a first detection system (5) for detecting at least the position of the articles (4) on the first transportation system (1);
- a handling device (6) for separately taking articles (4) from the first transportation system (1) and their transfer onto the second transportation system (2);
- a second detection system (8) for the identification of the articles (4);
- a deposition zone (10) downstream the second detection system (8) for interim storing an article (4) not identified by the second detection system (8) and its position change relative to its position in the handling device (6); and
- a data processing system for processing the data detected by the first and second detection systems (5, 8) and for controlling the handling device (6);
wherein the second detection system (8) is downstream the first detection system (5) and wherein the second detection system (8) is disposed between the first and second transportation systems (1, 2) and is directed to a point (B) of the pathway that is covered by an article (4) taken by the handling device (6) from the first transportation system (1) upon its transfer to the second transportation system (2).

2. The system according to claim 1
**characterized in that**
the first detection system (5) is an optoelectronic detection system directed to the first transportation system (1).

3. The system according to claim 1 or claim 2
**characterized in that**
the second detection system (8) is a bar code scanner.

4. The system according to any one of the preceding claims
**characterized in that**
the handling device (6) has at least one gripping or suction device (7).

5. The system according to any one of the preceding claims
**characterized in that**
the handling device (6) has several gripping and/or suction devices (7), wherein for taking an article (4) from the first transportation system (1) one of these gripping and/or suction devices (7) can be chosen on the basis of the data detected by the first detection system (5).

6. The system according to any one of the preceding claims
**characterized in that**
the handling device (6) is a robot having several axes of motion.

7. A method for separating and order picking articles, in particular pharmacy articles, comprising
(a) detecting at least the position of delivered articles (4) that are on a first transportation system (1);
(b) taking up an article (4) detected in step (a) from the transportation system (1) by means of a handling device (6);
(c) passing the article (4) taken in step (b) by the handling device (6) to a second detection system (8);
(d) identification of the article (4) by the second detection system (8) or, if the identification is not successful, depositing the article (4) onto a deposition zone (10) downstream the second detection system (8) and re-uptake of the article (4) by means of the handling device (6) from the deposition zone (10) while changing the position of the article (4) relative to its position in the handling device (6) and repeating steps (c) and (d) until the identification of the article (4); and
(e) depositing the identified article (4) onto a second transportation system (2).

8. The method according to claim 7
**characterized in that**
in step (a) in addition to the position of the delivered articles (4) also their dimensions are determined and in case of a handling device (6) having several gripping and/or suction devices (7) one of these gripping and/or suction devices (7) is chosen on the basis of the determined dimension of the article (4).

9. The method according to claim 7 or claim 8
**characterized in that**
in step (a) the delivered articles (4) are in upwardly open containers (3) that are transported on the first transportation system (1) to the first detection system (5) to detect at least the position of the delivered articles (4) in the containers (3); and that in step (e) the separated articles (4) are deposited in upwardly open containers (9) that are located on the second transportation system (2).

10. The method according to any one of claims 7 to 9
**characterized in that**
a data processing system is provided, wherein
(i) the first detection system in step (a) takes pictures of the delivered articles (4) and sends them to a data processing system;
(ii) a computer program stored in the data processing system determines at least the position of the delivered articles (4);
(iii) the data processing system generates control signals for the handling device (6) and sends them to the handling device (6);
(iv) the handling device (6) takes up an article (4) due to these control signals from the first transportation system (1) and carries it to the second detection system (8);
(v) the second detection system (8) detects identification information of the article (4) and sends them to the data processing system; and
(vi) in the data processing system the identification information detected by the second detection system (8) are compared to a database and, if the article (4) cannot be identified, control signals for the handling device (6) are generated by the data processing system and send to the handling device (6) so that the handling device (6) is caused to deposit the article (4) onto the deposition zone (10) downstream the second detection system (8), to re-uptake the article (4) from the deposition zone (10) while changing the position of the article (4) relative to its position in the handling device (6), and to carry the article (4) to the second detection system again as well as repeat the steps (v) and (vi) until the article (4) has been identified.

11. The method according to claim 10
**characterized in that**
the data processing system further calculates the location of the identified article on the second transportation system (2) and generates control signals for the handling device (6) and sends them to the handling device (6) so that the handling device (6) is caused to deposit the identified article (4) at the predetermined location on the second transportation system (2).

## Revendications

1. Système de séparation et de préparation de commande d'articles, en particulier d'articles de pharmacie, comprenant
- un premier dispositif de transport (1) destiné à réceptionner et à transporter les articles (4) livrés ;
- un second dispositif de transport (2) destiné à réceptionner et à transporter les articles séparés (4) ;
- un premier dispositif de détection (5) destiné à détecter au moins la position des articles (4) sur le premier dispositif de transport (1) ;
- un dispositif de manutention (6) destiné au prélèvement séparé d'articles (4) depuis le premier dispositif de transport (1) et au transfert desdits articles sur le second dispositif de transport (2) ;
- un second dispositif de détection (8) destiné à identifier les articles (4) ;
- une zone de dépôt (10) montée à la suite du second dispositif de détection (8) et destinée au stockage intermédiaire d'un article (4) non identifié par le second dispositif de détection (8) et à la modification de position dudit article par rapport à sa situation dans le dispositif de manutention (6) ; et
- un dispositif de traitement de données destiné à traiter les données détectées par le premier et le second dispositif de détection (5, 8) et à assurer la commande du dispositif de manutention (6) ;
le second dispositif de détection (8) du premier dispositif de détection (5) étant placé en aval et le second dispositif de détection (8) étant disposé entre le premier et le second dispositif de transport (1, 2) et étant ajusté sur un point (B) du trajet qu'un article (4) prélevé du premier dispositif de transport (1) par le dispositif de manutention (6) parcourt lors de son passage au second dispositif de transport (2).

2. Système selon la revendication 1,
**caractérisé en ce**
**que** le premier dispositif de détection (5) est un premier dispositif de détection optoélectronique qui est ajusté sur le premier dispositif de transport (1).

3. Système selon la revendication 1 ou la revendication2,
**caractérisé en ce**
**que** le second dispositif de détection (8) est un scanner de code-barres.

4. Système selon l'une des revendications précédentes,
**caractérisé en ce**
**que** le dispositif de manutention (6) comprend au moins un dispositif de préhension ou d'aspiration (7).

5. Système selon l'une des revendications précédentes,
**caractérisé en ce**
**que** le dispositif de manutention (6) comprend plusieurs dispositifs de préhension et/ou d'aspiration (7), l'un de ces dispositifs de préhension et/ou d'aspiration (7) pouvant être choisi pour le prélèvement d'un article (4) du premier dispositif de transport (1) sur la base des données détectées par le premier dispositif de détection (5).

6. Système selon l'une des revendications précédentes,
**caractérisé en ce**
**que** le dispositif de manutention (6) un robot avec plusieurs axe de mouvement.

7. Procédé de séparation et de préparation de commande d'articles, en particulier d'articles de pharmacie, comprenant
(a) la détection au moins de la position d'articles (4) livrés se trouvant sur le premier dispositif de transport (1) ;
(b) la réception d'un article (4) détecté lors de l'étape (a) par le premier dispositif de transport (1) à l'aide d'un dispositif de manutention (6) ;
(c) le guidage de l'article (4) prélevé à l'étape (b) par le dispositif de manutention (6) vers un second dispositif de détection (8) ;
(d) l'identification de l'article (4) par le second dispositif de détection (8) ou, si l'identification échoue, le dépôt de l'article (4) sur une zone de dépôt (10) placée en aval du second dispositif de détection (8) et nouveau prélèvement de l'article (4) par le dispositif de manutention (6) de la zone de dépôt (10) en modifiant la position de l'article (4) par rapport à la situation dudit dans le dispositif de manutention (6) et répétition des étapes (c) et (d) jusqu'à l'identification de l'article (4) ; et
(e) le dépôt de l'article (4) identifié sur un second dispositif de transport (2).

8. Procédé selon la revendication 7,
**caractérisé en ce**
**qu'**à l'étape (a) à côté de la position des articles (4) livrés, les dimensions desdits articles sont également déterminées et dans le cas d'un dispositif de manutention (6) avec plusieurs dispositifs de préhension et/ou d'aspiration (7), un de ces dispositifs de préhension et/ou d'aspiration (7) est choisi sur la base de la dimension déterminée de l'article (4).

9. Procédé selon la revendication 7 ou la revendication 8,
**caractérisé en ce**
**qu'**à l'étape (a) les articles (4) livrés se trouvent dans des conteneurs de transport (3) ouverts vers le haut qui sont transportés sur le premier dispositif de transport (1) vers le premier dispositif de détection (5) destinés à détecter au moins la position des articles (4) dans les conteneurs de transport (3) et qu'à l'étape (e) les articles (4) séparés sont déposés dans des conteneurs de transport (9) ouverts vers le haut qui se trouvent sur le second dispositif de transport (2).

10. Procédé selon l'une des revendications 7 à 9,
**caractérisé en ce**
**qu'**un dispositif de traitement de données est prévu,
(i) à l'étape (a), le premier dispositif de détection enregistrant des images des articles (4) livrés et les transmet à un dispositif de traitement des données ;
(ii) un programme informatique stockés dans le dispositif de traitement de données déterminant au moins la position des articles (4) livrés ;
(iii) le dispositif de traitement de données générant des signaux de commande pour le dispositif de manutention (6) et les transmettant au dispositif de manutention (6) ;
(iv) le dispositif de manutention (6) recevant du premier dispositif de transport (1) un article (4) à la suite de ces signaux de commande et le transmettant au second dispositif de détection (8) ;
(v) le second dispositif de détection (8) détectant des informations de détection de l'article (4) et le transmettant au dispositif de traitement de données ; et
(vi) dans le dispositif de traitement de données, les informations d'identification détectées par le second dispositif de détection (8) étant comparées avec une base de données et en cas de on identification de l'article (4), des signaux de commande étant générés par le dispositif de traitement de données pour le dispositif de manutention (6) et transmis au dispositif de manutention (6) de façon que le dispositif de manutention (6) procède au dépôt de l'article (4) sur la zone de dépôt (10) montée à la suite du second dispositif de détection (8), à la nouvelle réception de l'article (4) de la zone de dépôt (10) en modifiant la position de l'article (4) par rapport à la situation dudit article dans le dispositif de manutention (6) et au nouveau guidage de l'article (4) vers le second dispositif de détection (8) ainsi qu'à la répétition des étapes (v) à (vi) jusqu'à ce que l'article (4) soit identifié.

11. Procédé selon la revendication 10,
**caractérisé en ce**
**que** le dispositif de traitement de données calcule en plus le lieu de dépôt de l'article identifié sur le second dispositif de transport (2) et génère des signaux de commande pour le dispositif de manutention (6) et les transmet au dispositif de manutention (6) de façon que le dispositif de manutention (6) procède au dépôt de l'article (4) identifié au lieu de dépôt indiqué sur le second dispositif de transport (2).
